(19)

Europäisches
Patentamt

European
Patent Office

Office européen
des brevets

(11)  **EP 4 488 939 B1**

(12)                **EUROPEAN PATENT SPECIFICATION**

(45) Date of publication and mention
of the grant of the patent:
**02.04.2025  Bulletin 2025/14**

(21) Application number: **23184034.9**

(22) Date of filing: **07.07.2023**

(51) International Patent Classification (IPC):
**G06T 7/277** *(2017.01)*      **G06V 10/82** *(2022.01)*
**G06V 10/26** *(2022.01)*      **G06V 10/62** *(2022.01)*

(52) Cooperative Patent Classification (CPC):
**G06T 7/277; G06V 10/26; G06V 10/62;
G06V 10/82;** G06T 2207/10016; G06T 2207/10028;
G06T 2207/20081; G06T 2207/20084

(54)  **A METHOD AND NON-TRANSITORY COMPUTER-READABLE STORAGE MEDIUM FOR DETECTING ONE OR MORE OCCLUDED AREAS OF A SCENE**

VERFAHREN UND NICHTTRANSITORISCHES COMPUTERLESBARES SPEICHERMEDIUM ZUR ERKENNUNG EINES ODER MEHRERER VERDECKTER BEREICHE EINER SZENE

PROCÉDÉ ET SUPPORT DE STOCKAGE LISIBLE PAR ORDINATEUR NON TRANSITOIRE POUR DÉTECTER UNE OU PLUSIEURS ZONES OCCLUSES D'UNE SCÈNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**08.01.2025  Bulletin 2025/02**

(73) Proprietor: **Axis AB**
**223 69 Lund (SE)**

(72) Inventors:
• **Papadelis, Aras**
**223 69 LUND (SE)**
• **Danielsson, Niclas**
**223 69 LUND (SE)**

(74) Representative: **AWA Sweden AB**
**Box 5117**
**200 71 Malmö (SE)**

(56) References cited:
• **JAMES BLACK ET AL: "Hierarchical database for a multi-camera surveillance system", PATTERN ANALYSIS AND APPLICATIONS, SPRINGER-VERLAG, LO, vol. 7, no. 4, 1 December 2004 (2004-12-01), pages 430 - 446, XP019381474, ISSN: 1433-755X, DOI: 10.1007/ S10044-005-0243-8**
• **FERNÁNDEZ-SANJURJO MAURO ET AL: "Real-Time Traffic Monitoring with Occlusion Handling", 22 September 2019, TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, CORNELL UNIVERSITY LIBRARY, 201 OLIN LIBRARY CORNELL UNIVERSITY ITHACA, NY 14853, PAGE(S) 273 - 284, XP047523419**
• **RATHNAYAKE THARINDU ET AL: "On-Line Visual Tracking with Occlusion Handling", SENSORS, vol. 20, no. 3, 10 February 2020 (2020-02-10), pages 929, XP055870914, DOI: 10.3390/s20030929**

EP 4 488 939 B1

**Description**

Technical Field

The present invention relates to object tracking and in particular to a computer-implemented method for detecting one or more occluded areas of a scene analysed by an object tracking system.

Background

Object tracking is an important and widely studied field within computer vision. The goal of object tracking is to keep track of an object (or multiple objects) in sensor data capturing a scene.

Occlusion presents a substantial challenge in object tracking, for example when the tracked object is concealed by a static object in the scene. For instance, a tracking algorithm may lose a pedestrian that is momentarily obscured behind a tree or a building.

When an object track is lost, a process referred to as coasting may be used to try to resume the object track again. Coasting refers to the practice of predicting an object's position based on its previous movement when the object is temporarily undetected, such as during occlusions or signal loss. It utilizes techniques like linear extrapolation or more complex motion models to estimate the object's trajectory. Coasting continues to estimate the object's trajectory during the period of loss, maintaining a hypothetical track. When a new object is detected close to the hypothetical track, the object may be considered to be the same as the object of the lost track, and the track can be considered to be successfully reacquired and tracking resumes. However, coasting carries the risk of accruing errors over time, particularly if the object changes its speed or direction while undetected. For this reason, coasting of an object track is typically only performed for a certain period of time (referred to as coasting period). If the object track has not been successfully reacquired before the end of the coasting period, the coasting is considered as failed, and the object track is considered as lost and is deleted.

If the coasting process fails, or generally when an object track is lost, a re-identification process may be used to try to resume the lost track. Re-identification refers to the process of identifying an object in a video sequence as the same object that was previously detected (e.g., before being occluded) in a previous frame or frames of the video sequence or in a frame of another video sequence. When re-identifying the object, the track that was lost can be continued. Re-identification works by extracting meaningful features from the detected objects. When an object needs to be re-identified (for example, after it was occluded or left the field of view), features are extracted from untracked objects in a scene. Then, a similarity measure (like Euclidean distance or cosine similarity) is used to compare the feature vector of the new detection with the feature vectors previously extracted for objects in lost tracks. If a match is detected, a lost track can be continued.

Re-identification typically requires substantial computational resources. Moreover, re-identification is not possible in all object tracking systems, such as systems tracking objects in data captured by a radar device.

Maintaining a map of occluded areas of the monitored scene may improve the coasting process and/or the re-identification process. However, it may be complex to correctly identify occluded areas in the scene and use these to predict object behaviour while being occluded.

There is thus a need for improvements in this context.

Hierarchical database for a multi-camera surveillance system (JAMES BLACK ET AL, PATTERN ANALYSIS AND APPLICATIONS, SPRINGER-VERLAG, LO, vol. 7, no. 4, 1 December 2004, XP019381474) presents a framework for event detection and video content analysis for visual surveillance applications.

Real-Time Traffic Monitoring with Occlusion Handling (FERNANDEZ-SANJURJO MAURO ET AL, TOPICS IN CRYPTOLOGY - CT-RSA 2020, 22 September 2019, XP047523419) proposes a traffic monitoring system that combine detection and tracking in a way that may meet the requirements of operating in real time while being robust against occlusions.

Summary

In view of the above, solving or at least reducing one or several of the drawbacks discussed above would be beneficial, as set forth in the attached independent patent claims.

According to a first aspect of the present invention, there is provided a computer-implemented method for detecting one or more occluded areas in one or more video sequences analysed by an object tracking system, the method comprising: providing one or more video sequences, wherein the one or more video sequences are depicting a same scene, the one or more video sequences comprising a plurality of objects; determining a plurality of object tracks in the one or more video sequences, and of one or more occluded areas in the one or more video sequences.

Building the map comprises steps a) and b):

a) upon determining that a first object track among the plurality of object tracks is lost, the first object track corresponding to a first object among the plurality of objects, running a re-identification algorithm on at least one video sequence of the one or more video sequences to try to resume the first object track;

b) upon successfully resuming the first object track: determining a first area where the first object track is lost, wherein the first area is determined in the one or more video sequences among a plurality of areas in the one or more video sequences, and a second area where the first object track is resumed, wherein the second area is determined in the one or more video sequences among the plurality of areas in the one or more video sequences, wherein each area of the plurality of areas in the one or more video sequences refers to an area in a 2D representation of a 3D area of the scene as captured by the one or more video sequences, wherein the one or more video sequences are associated with a base coordinate system to which objects and areas depicted in image frames of the each video sequence are transformed; and adding a connection between the first and the second area to the map of one or more occluded areas, such that the map identifies that an object track being lost in the first area has been resumed in the second area.

In the below, the expression "areas in the one or more video sequences depicting the scene" and similar expressions referring to areas in the 2D representation of the scene that the one or more video sequences captures may be simplified to just "areas of the scene" or similar, for simplicity and ease of explanation. It should be noted that in case several video sequences are used, if these are captured from e.g., different positions in the (real) scene, the coordinate system of one of the video sequences may generally function as the base coordinates system for the plurality of video sequences, such that object detections, areas etc in a video sequence may be transformed into the base coordinate system. In case only one video sequence produced by a fixed camera captures the scene, each area of the scene may be represented by a certain pixel area in the image frames of the video sequence. In case the one video sequence is captured by a video camera with a changing field of view, a similar base coordinate system as described above may be determined and used to transform areas/detections from one image frame to another (e.g., using the pan, tilt, role, zoom parameters of the moving camera). Generally, an area of the scene as used herein is a representation of a real world 3D area in the 2D representation formed by a video sequence capturing the real world scene.

By the term "occluded area" should, in the context of present specification, be understood as an area in the one or more video sequences depicting the scene in which the object tracker system tracking objects in the one or more video sequences loses track of an object it is tracking. The occluded area is herein referred to as an area between a first area where a track has been lost and a second area where the track has been resumed. An occluded area is thus an area in the video sequence(s) that extends between one area where historical tracking data statistically shows that the tracker could no longer track (or reasonably reliably predict, possibly after a coasting period) an object, the first area (the "start area"), and another area where a re-identification algorithm has successfully matched the lost object's track with another object's track, the second area (the "end area"). Consequently, the map of occluded areas as used herein refers to a map of connections between areas in the video sequence, i.e., connections between a start area and one or more end areas.

An occluded area may be the result of static objects that prevent direct observation or detection (in the sensor data from the sensing or imaging system such as a camera or radar) of other objects behind them. This may also be the result of a more temporary occlusion of a tracked object in the real-world scene, such as a person getting temporarily occluded by another person or car. Other examples of reasons for an occluded area includes that it is very dark in a certain area in one or more video sequences, or that a privacy mask is added to a certain area in one or more video sequences such that no detections of objects from the object tracking system may be received for objects in these areas.

Object tracking is the process of locating and following an object's position and movement across a series of image frames in a video sequence. It involves detecting and identifying the object in the initial frame and then continuously updating its position in subsequent frames by matching object detection in the subsequent frames to the object in the initial frame. By the term "object track is lost" or similar terms should, in the context of present specification, be understood that an object tracker system for some reasons do not detect an object in a frame which can be matched to the object track detected in previous frames. In some embodiments, the object track may be considered lost after the coasting process have failed as described further below. In other embodiments, for example when coasting is not implemented or for other reasons, the object track may be considered as lost as soon as the object tracker system does not detect an object in a frame that can be matched to the object track from the previous frames. In some embodiments, the object track is considered as lost when the object tracker system has not detected an object during a threshold number of frames that can be matched to the object track from previous frames.

By the term "resuming the first object track" or similar terms should, in the context of present specification, be understood that an object track that was previously lost (for example, due to occlusion or the object moving out of the frame) has been successfully resumed (restored, re-established, continued, matched with a previously lost track, etc.) using the re-identification algorithm. The objective of re-identification is to correctly associate, or match a given object across different video sequences or image frames, even when there are temporal gaps in between these observations. With the aid of a re-identification algorithm, the initial object tracking process can thus be resumed by tracking the same object that has been re-identified following a period of loss (for example, due to occlusion by another object).

As described above, in an object tracking application, coasting is typically used to try to resume an object track when the tracked object is occluded. The coasting process has a set coasting period which defines for how long a hypothetical track is maintained before the coasting process times out. After the coasting process have timed out, or for other reasons as described above, the track may be considered as lost, and re-identification may be employed to try to resume the object track. The re-identification algorithm may be run on subsequent image frames in the video sequence as where the latest observation of the object in the lost object track was made, or on other video sequences capturing the same scene. Upon a successful re-identification, the object track may be resumed by continuing the tracking of the re-identified object.

The inventors have realized that successful re-identifications may indicate the locations and size of occluded areas in the monitored scene, as well as indicate an object's trajectory when being occluded. Specifically, using positions in the scene where tracked objects are detected, locations/areas in the monitored scene where an object track is lost may be identified and registered (for example stored in a database structure, in a log file or in memory). When a lost track has been successfully resumed using the re-identification process, the location/area in the monitored scene where the track is resumed (i.e., where the object determined to match the object of the lost track is detected) is similarly registered. Advantageously, it is determined that an object being lost in a first area of the scene have been re-identified in a second area of the scene. Consequently, it may be determined that an occluded area exist between the first area and the second area of the scene. A map of one or more occluded areas of the scene may thus be determined. In the below, the map of one or more occluded areas may be referred to simply as the map of occluded areas for simplicity.

The map of one or more occluded areas comprises connections between areas of the monitored scene such that it identifies, for a specific area of the scene (the "start" of an occluded area), one or more other areas in the scene where an object track being lost in that specific area of the scene has been resumed (the "end" of the occluded area). The map may be implemented using a table or similar data structure, where each area where an object track has been lost is connected (e.g., connected via a shared ID or similar) to one or more areas where the object track has been resumed. The connection may be implemented by creating a table of positions in the one or more video sequences where object tracks have been lost and successfully resumed. These positions are mapped to areas in the one or more video sequences, as will be further described below (e.g., predetermined areas, or using a clustering algorithm). Each area may be represented by a centre point or by a range (e.g., a pixel coordinate or a pixel area). Using this, it can be determined if an object is close to an area (e.g., just before an object tracker loses track of it), as will be discussed further below.

By applying re-identification to all newly appearing objects (i.e., objects that are not currently being tracked) spatial connections are established between locations in the scene where an object disappeared and positions in the scene where the same object later reappeared. These disappearances are interpreted as occlusions in different parts of the scene and can later be used to modify the tracking system behaviour in the occluded parts of the scene, thereby making the tracking system scene-adaptive and improved.

Advantageously, a map of occluded areas may be maintained and updated. For example, the map may be defined "offline" using video sequence(s) capturing the monitored scene. The map of occluded areas may then be used in a real-time object tracking application to improve object tracking, for example to reduce the number of lost object tracks, reduce the number of erroneous object tracks, and/or to reduce computational resources required to implement the object tracking.

In some embodiments, building the map comprises performing step a) and b) on a plurality of lost object tracks among the plurality of object tracks. Consequently, the map of one or more occluded areas may identify a plurality of areas of the scene where one or more object tracks have been lost. Moreover, the map of occluded areas may identify, for each area where one or more object tracks have been lost, one or more areas where the lost object(s) have been resumed. Advantageously, a more flexible map of one or more occluded areas may be determined, identifying a plurality of occluded areas in the scene, and/or taking into account that objects being occluded may take different trajectories while being occluded. In some embodiments, an area of the scene is not determined to be the start or the end of an occluded area until at least a threshold number of object tracks have been lost or resumed in this area. Advantageously, a more reliable map of occluded areas may be determined.

In some embodiments, wherein the map of one or more occluded areas further indicates a probability that an object track being lost in the first area is resumed in the second area.. For example, if 5 out of 10 object track that are lost in the first area of the scene are resumed in the second area of the scene, the probability for that connection in the map of occluded areas may be indicated to be 50%.

In some embodiments, the map indicates that an object track being lost in the first area has been resumed in a subset of areas in the one or more video sequences, the subset comprising at least two areas in the one or more video sequences among the plurality of areas in the one or more video sequences, wherein the map further indicates for each area in the subset, the probability that an object track being lost in the first area is resumed in that area in the subset. Put differently, if object tracks being lost in the first area of the scene is determined to be resumed in for example the second and a third area of the scene (thus a subset of areas in the scene, the subset including two areas of the scene in this example), the map may indicate a probability for each of these connections. For example, if 5 out of 10 object track that are lost in the first area of the scene are resumed in the second area of the scene, the probability for that connection (between the first and the second area of the scene) in the map of occluded areas may be indicated to be 50%. Of the remining 5 lost tracks, 3 may be resumed in the third area of the scene, such that the probability for that connection (between the first and the third area of the scene) in the map of occluded areas is indicated to be 30%. The remaining 2 lost track may for example not be successfully resumed using the re-identification process or determined to be resumed in yet another area of the scene.

In examples, the method further comprises: providing sensor data capturing the scene; tracking a second object in the sensor data to determine a second object track; and upon determining that the second object being untrackable in the sensor data, determining a position in the sensor data of a latest observation of the second object in the second object track, and upon determining that the position of the latest observation of the second object in the second object track is within a threshold distance from the first area: identifying, from the map, an area in the one or more video sequences where an object track being lost in the first area has been resumed, and determining a distance between the first area and the identified area, and setting a coasting period for the second object track based on the determined distance, wherein a larger distance results in a comparably longer coasting period.

Advantageously, the map of occluded areas may be used to adapt the coasting period/coasting time based on where in the scene an object of an object track is located when coasting is started for that object track. When coasting is started, the object is considered as untrackable in the sensor data, for example due to the object is being occluded. When an object is occluded or otherwise not detectable in a current image frame (or similar for other types of sensor data) of a video sequence, there is no detection of that object in the current image frame that can be matched to the existing object track for that object (i.e., as determined for previous image frames). In other words, the second object is considered untrackable when coasting is started for the second object track.

Typically, the coasting period is predetermined for the object tracking system. However, based on a size of an occluded area, a coasting period may need to be prolonged at certain areas of the scene, and may be reduced for other areas. In this example, in case the second object was detected in or near the first area of the scene before coasting was initiated, the coasting period may thus be adapted based on an estimated distance in the scene between the start (the first area) and the end (determined from the map of occluded areas) of the occluded area that the second object entered (and thus being untrackable in the sensor data). For the second object (having a certain speed before coasting is started) a longer distance results in a longer coasting period, compared to a shorter distance.

Advantageously, this may improve object tracking and reduce the number of lost tracks, which in turn reduces the need of the computational demanding re-identification process. Moreover, as discussed above, re-identification may not be available for all types of sensor data. For example, re-identification is not available for radar (Radio Detection and Ranging) or lidar (light detection and ranging) data. Using the techniques discussed herein, video data capturing the scene may be used to define the map of occluded areas, while object tracking using radar data may be improved using the map of occluded areas as described herein. In this embodiment, the map of occluded areas is transformed into radar coordinates. If the sensor data comprises a video sequence captured from another position or otherwise having a different coordinate system compared to the map of occluded areas, a transformation is necessary to map positions etc from the video sequence to the map of occluded areas, as further described above.

Furthermore, by reducing the coasting time for some areas of the scene, deletion of no longer relevant tracks may be improved, which in turn may reduce compute and reduce the risk of erroneous results from coasting.

In examples, the step of identifying from the map, an area in the one or more video sequences where an object track being lost in the first area has been resumed comprises: selecting the area in the one or more video sequences from the subset having the largest probability as indicated by the map.

Consequently, in case the map of one or more occluded areas identifies that more than one area of the scene, where an object track being lost in the first area of the scene has been resumed, the most likely area from the subset of areas may be selected and used to determine the coasting period. Alternatively, or additionally, an angle of motion that the second object has in the latest observation of the second object in the second object track (before the coasting process is started) may be used when selecting which of the subset of areas to use to determine the coasting period such that the area among the subset of areas that has the most similar angle in relation to the first area may be prioritized (e.g. probability increased) in the selection process.

In some embodiments, setting the coasting period comprises: determining a speed of the second object at the latest observation of the second object in the second object track; and setting the costing period for the second track further based on the speed of the second object, wherein a higher speed results in a comparably shorter coasting period.

Consequently, both the estimated distance from the start to the end of the occluded area (i.e.,

estimated size of the occluded area) and the velocity of the second object is used to determine the coasting period, resulting in a more accurate estimation of how long the second object may be occluded.

In some embodiments, also the second object's estimated trajectory and position during occlusion may be improved using the techniques described herein. For example, in some embodiments, upon determining that the second object being untrackable in the sensor data: the method comprises predicting a position of the second object while being untrackable in the sensor data based on the determined speed. For example, a point in time when the second object is considered as untrackable plus the determined speed may thus result in that the hypothetical track of the second object may be more accurate, resulting in an improved coasting process.

In some examples, the method further comprises, upon determining that the second object being untrackable in the sensor data: determining an angle between the first area and the identified area in the one or more video sequences; and predicting the position of the second object while being untrackable in the sensor data further based on the angle.

Advantageously, based on the behaviour of previously objects being occluded in the same area of the scene, the hypothetical track of the second object may be more accurately estimated while the second object being occluded, since the position of the second object in the hypothetical track may be predicted as described herein.

According to some embodiments, the sensor data is one of; radar data, lidar data, or video data. As previously discussed, the techniques described herein may be used to improve object tracking in radar/lidar data, where re-identification algorithms are not applicable. Moreover, both for radar data, lidar data and video data, the map of occluded areas may be employed to improve the coasting process, as discussed herein.

According to some embodiments, the plurality of areas in the one or more video sequences comprises a plurality of predetermined areas in the one or more video sequences. For example, the scene may be divided into areas based on the format and the resolution of the sensor data capturing the scene. In some examples, each area corresponds to a certain area of pixels (X*Y pixels large) in an image frame of the video sequences capturing the scene. In some examples, each area corresponds to a certain physical size of the scene, such as Z*W meters (or other size units) as represented by the one or more video sequences.

In some examples, the one or more video sequences is iteratively divided into the plurality of areas in the one or more video sequences, based on positions in the one or more video sequences where an object track among the plurality of object tracks is lost and resumed. For example, a configuration phase (offline or online) may comprise a first phase where objects are tracked to determine positions in the scene where object tracks are lost and resumed to determine the areas of the scene that will used in the second phase where the map of occluded areas is determined (based on the plurality of areas of the scene) as described above. In other embodiments, the first and the second phase is implemented simultaneously such that when the areas of the scene changes based on the gathered statistics about lost and resumed (re-identified) tracks, the map of occluded areas is updated accordingly.

In some embodiments, the step of iteratively dividing the one or more video sequences into the plurality of areas in the one or more video sequences comprises: determining a first plurality of positions, each position indicating a position in the one or more video sequences where an object track among the plurality of object tracks is lost, clustering the first plurality of positions into a first plurality of clusters, and for each cluster of the first plurality of clusters, determine an area in the one or more video sequences based on the positions in the cluster; and determining a second plurality of positions, each position indicating a position in the one or more video sequences where an object track among the plurality of object tracks is resumed, clustering the second plurality of positions into a second plurality of clusters, and for each cluster of the second plurality of clusters, determine an area in the one or more video sequences based on the positions in the cluster.

Any suitable clustering algorithm may be used, depending on requirements on the object tracking application. Example of clustering algorithms include OPTICS (Ordering Points To Identify the Clustering Structure), Mean shift and Density-Based Spatial Clustering of Applications with Noise (DBSCAN).

As indicated above, the map of occluded areas may have many uses in an object detecting or tracking application.

In one embodiment, the method comprises the steps of: providing sensor data capturing the scene; tracking a third object in the sensor data to determine a third object track; determining that a location of the third object in the sensor data is within a threshold distance from the first area in the one or more video sequences; and determining a feature vector for the third object for the purpose of object re-identification in the object tracking application.. Advantageously, the present method may provide a low complexity and efficient selection criteria for which objects that may be analysed to determine feature vectors for object re-identification. By giving precedence to areas in the scene where object tracks have been lost before, objects that are likely to be occluded in subsequent image frames can be prioritized for feature extraction. This approach prioritizes objects that the tracking system might lose track of in subsequent image frames.

According to a second aspect of the invention, the above object is achieved by a non-transitory computer-readable storage medium having stored thereon instructions for implementing the method according to the first aspect when executed on a device having processing capabilities.

According to a third aspect of the invention, the above object is achieved by a system for detecting one or more occluded areas of a scene analysed by an object tracking system, comprising: one or more processors; and one or more non-transitory computer-readable media storing computer executable instructions that, when executed by the one or more processors, cause the system to perform actions according to the first aspect.

The second and third aspect may generally have the same features and advantages as the first aspect. It is further noted that the disclosure relates to all possible combinations of features unless explicitly stated otherwise.

Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:

Figure 1 shows a scene comprising a plurality to objects and a plurality of occluded areas according to embodiments;

Figure 2 shows a visualization of the map of occluded areas as determined for the scene shown in figure 1, according to embodiments;

Figure 3 show a visualization of parts of the map of occluded areas as determined for the scene shown in figure 1, according to other embodiments;

Figure 4 shows a visualization of the map of occluded areas as determined for the scene shown in figure 1, according to third embodiments;

Figure 5 shows a method for detecting one or more occluded areas of a scene analysed by an object tracking system, according to embodiments;

Figure 6 shows a method for determining coasting parameters using the map of occluded areas as detected using the method of figure 5;

Figure 7 shows a method for prioritizing areas in a scene for purpose of object re-identification in the object tracking application using the map of occluded areas as detected using the method of figure 5.

Detailed Description

Occlusion poses significant challenges in object tracking because it leads to the temporary obstruction of a target object from the tracking system's viewpoint. The lack of visual information during the occlusion period introduces uncertainty into the tracking process. Furthermore, any abrupt change in the visible portion of the object can cause confusion for the tracking system, particularly if it relies heavily on visual features to identify and track the object. An additional difficulty may arise if the object alters its state such as speed or direction during occlusion. This may make predicting the re-emergence of the object especially challenging, thereby complicating the process of re-identification.

An object tracking system may use several techniques to identify and keep track of occluded areas in a monitored scene. For example, using depth information from stereo cameras, lidar, or depth sensors, a tracking system can identify when an object moves behind another, indicating a potential occlusion. However, this technique is dependent on the availability and accuracy of depth information, which may not always be reliable or available. Other techniques include machine learning models that can be trained to predict occlusions based on patterns and features in the input data. These models may be complex to implement and require substantial amounts of training data.

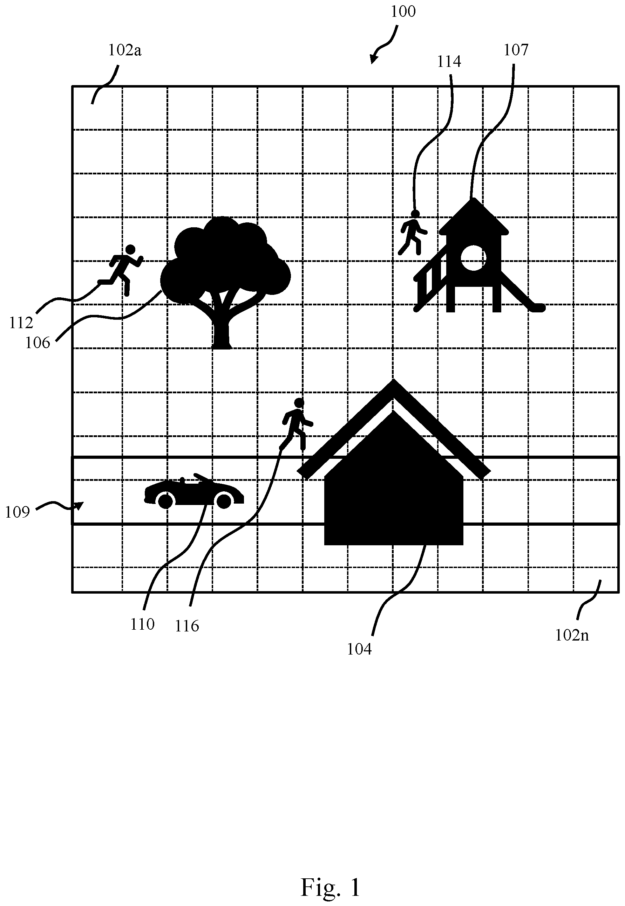

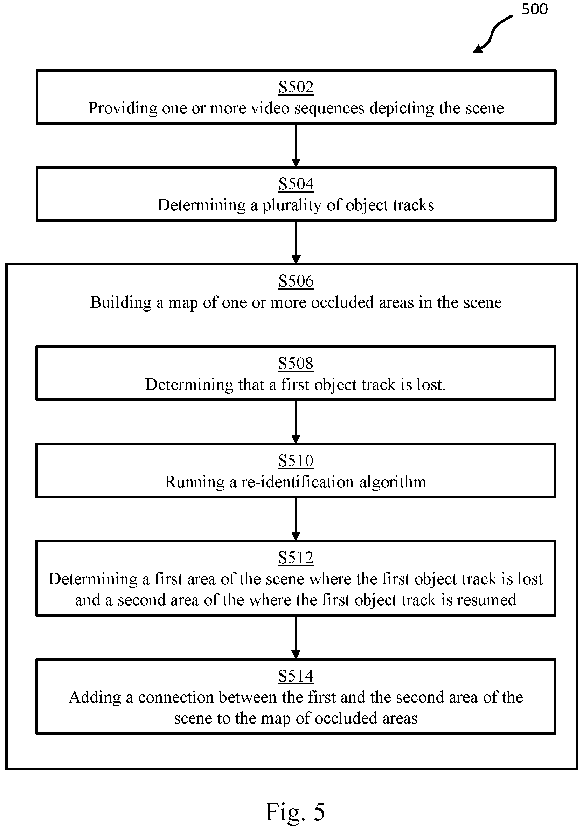

The inventors have realized that using re-identification techniques, which is an existing component in many object tracking system, a map of occluded areas may be built and used to improve object tracking. Such techniques will now be described in conjunction with figures 1-4, supported by the flow chart presented in Figure 5.

Figure 1 shows a scene 100 analysed by an object tracking system. The scene comprises three static objects 104, 106, 107 which forms occluded areas. For instance, an individual 112 who is jogging within the scene 100 may temporarily disappear behind a tree 106. Similarly, another person 114, walking within the same scene 100, could momentarily vanish behind a playground building 107. A car 110 moving along a road 109 may become obscured by a house 104, and another pedestrian 116 walking adjacent to the road 109 might also be concealed by the same house 104. Depending on the size and shape of the occluding objects 104, 106, 107, the speed of movement of the objects 110, 112, 114, 116 as well as the direction of those objects 110, 112, 114, 116 while being occluded all influence for how long duration the moving objects 110, 112, 114, 116 are hidden from view of a tracking system analysing the scene 100.

As discussed above, when an object track is lost, a process referred to as coasting may be used to try to resume the object track again. Coasting continues to estimate the object's trajectory during the period of loss, maintaining a hypothetical track, using e.g., a Kalman filter. Coasting carries the risk of accruing errors over time, particularly if the object changes its speed or direction while undetected. Moreover, coasting is typically performed for a specified duration of time, referred herein as coasting period or coasting time. During the coasting period, the system uses prior information and a motion model to estimate the current state of the object. Once the coasting period has elapsed, the tracking system will typically mark the track as lost if the object has not been re-detected. After the track have been lost, a process called re-identification may be performed as described above and further below. In other embodiments, for example when coasting is not implemented or for other reasons as described above, the track is considered (determined) as lost when an object tracker no longer can track the object of the object track, as further described above, and re-identification may be performed.

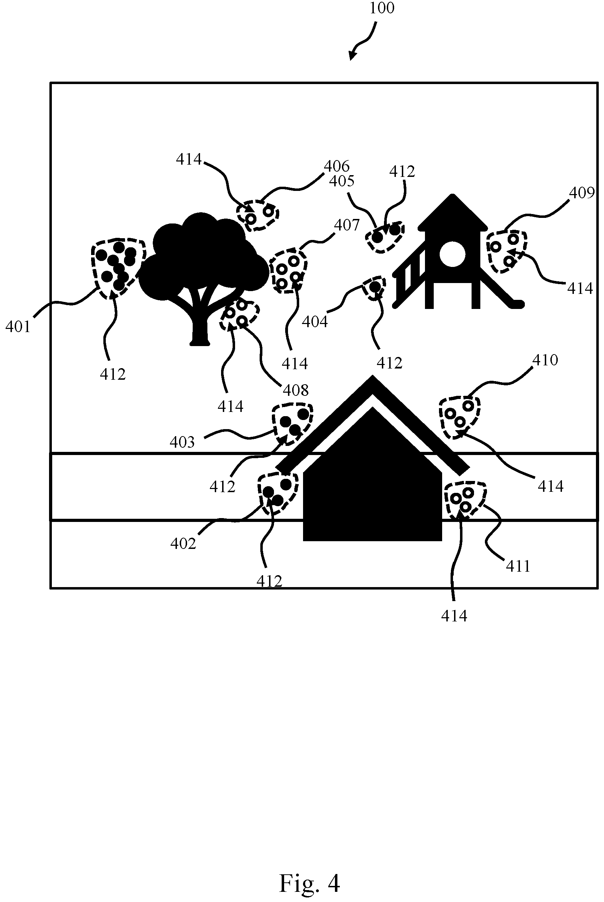

The scene 100 shown in figure 1 has been divided into a plurality of predetermined areas 102a-n, represented by dashed lines. For example, each such area corresponds to a pixel area of an image frame of a video sequence capturing the scene 100. These areas 100a-n may be used to identify occluded areas in the scene. Other ways of dividing the scene 100 into areas may be employed, for example as described in conjunction with figure 4 below.

A method 500 for detecting one or more occluded areas of a scene 100 analysed by an object tracking system, shown in figure 5, may start by providing S502 one or more video sequences depicting the scene 100, e.g., the scene 100 in figure 1. The one or more video sequences may comprise a plurality of tracked objects 110, 112, 114, 116. Consequently, a plurality of object tracks is determined S504, each object track being associated with a single object among the plurality of objects 110, 112, 114, 116.

It should be noted that the scene may comprise any number (1 - n) of occluded areas. In the example of figure 1, the scene 100 comprises three occluded areas.

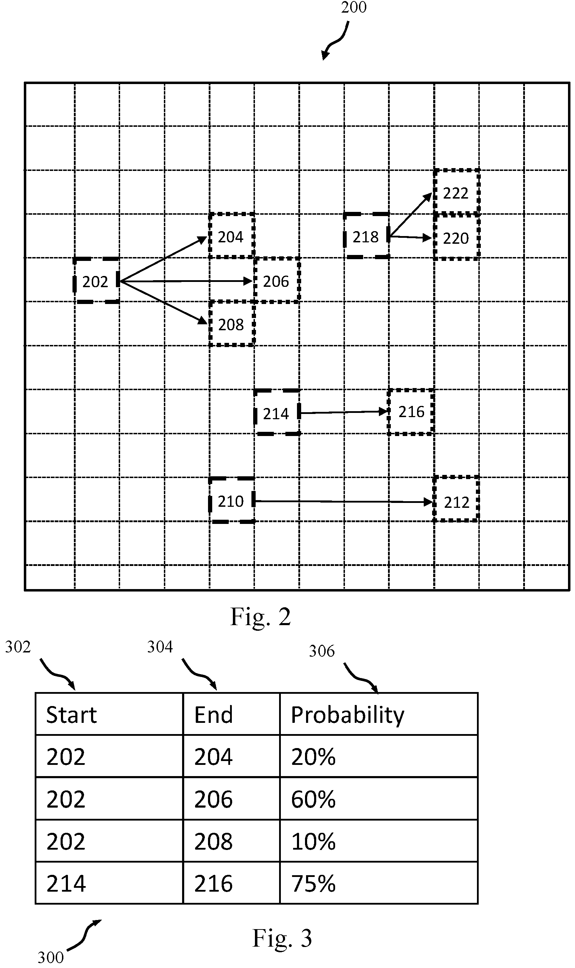

A map of occluded areas may be built S506 as described by the method of figure 5. Figure 2 shows an example of such map 200 according to some embodiments. The map 200 includes the corresponding areas (marked by dashed lines in figure 2) of the scene as the areas 102a-n from figure 1, but the areas in map 200 are referred to with specific numbers (202 - 222) for ease of explanation.

When the object tracking system marks a tracked object as lost, such as for example the person 116 from figure 1 when it gets occluded by the building 104, a re-identification algorithm may be run S510. The re-identification algorithm may be run on the same video sequence as the one where the person 116 last was detected, or on another video sequence capturing the scene 100. The purpose of the re-identification algorithm is to try to resume the object track associated with the person 116.

Re-identification algorithms aim to recognize the same object across different spatial or temporal gaps. These algorithms can vary greatly based on the specific requirements of the application, the kind of objects being tracked, and the types of features used for identification. Examples include Euclidean distance-based matching or cosine similarity-based matching to measure the similarity between feature vectors. More complex methods such as Deep Learning Based Re-Identification may be used. For example, Convolutional Neural Networks (CNNs) can be trained to extract feature vectors from images of objects and perform re-identification.

When the object track is successfully resumed, the method 500 comprises the step of determining S512 a first area of the scene 100 among a plurality of areas of the scene 100 where the object track is lost and a second area of the scene 100 among the plurality of areas of the scene 100 where the first object track is resumed. A connection may then be added between the first and the second area of the scene to the map of occluded areas, such that the map identifies that an object track being lost in the first area of the scene has been resumed in the second area of the scene.

For example, as indicated by the map 200 in figure 2, an object track associated with the person 116 may be lost at a first area 214 (also referred to as a start area) of the scene and resumed at a second area 216 (also referred to as an end area) of the scene. The connection between the first area 214 and the second area 216 are indicated as an arrow in figure 2. Consequently, the map 200 identifies that an object track being lost in the first area 214 of the scene has been resumed in the second area 216 of the scene. Put differently, the map 200 indicates that there may be an occluded area between the first area 214 and the second area 216 of the scene.

In some cases, the map 200 indicates that an object track being lost in an area of the scene has been resumed in a subset of areas of the scene, the subset comprising at least two areas of the scene among the plurality of areas of the scene. This example is shown in figure 2 for the occluded area resulting from the tree 106 in the scene 100. According to the map 200, object tracks that got lost in the area 202 of the scene has been resumed in a plurality of areas 204, 206, 208 of the scene. For example, an object track associated with the jogging person 112 may have been re-identified, after being occluded by the tree 106, in area 206 of the scene. Another tracked object (not shown in figure 1), which was lost in the same area 202 of the scene, may have been re-identified in area 204 of the scene, while a third tracked object (not shown in figure 1), which was lost in the same area 202 of the scene, may have been re-identified in area 208 of the scene. Accordingly, building the map may comprise performing step S512 and S514 of the method 500 on a plurality of lost object tracks.

The map 200 further indicates two other occluded areas, in that a connection between the area 210 and the area 212 is included in the map, as well as a connection between the area 218 and a plurality of areas 220, 222.

Figure 3 shows of a map 300 of occluded areas shown according to some embodiments. The map 300 corresponds to parts of the map 200 shown in figure 2 and thus shows a map 300 of occluded areas in the scene 100 shown in figure 1 using another representation. In figure 3, the map 300 is represented by a table, including a column for start areas 302 and end areas 304, where each row represents a connection between the start area and an end area of the scene between which an occluded area is situated. For example, the table 300 identifies that an object track being lost in the start area 214 of the scene has been resumed in the end area 216 of the scene. The table further indicates a probability 306 that an object track being lost in that start area 214 of the scene is resumed that end area 216 of the scene. In the example of figure 3, the table indicates that this probability is 75%. In other words, 75% of the object tracks being lost in the area 214 of the scene has been resumed in the area 216 of the scene. Table 300 further comprises a representation of the occluded area resulting from the tree 106 of the scene 100. The table 300 comprises three rows relating to the occluded area resulting from the tree 106 of the scene 100. The first row represents the connection between the start area 202 and end area 204 of the scene. The second row represents the connection between the start area 202 and end area 206 of the scene. The third row represents the connection between the start area 202 and end area 208 of the scene. Each of the three rows further comprises an associated probability. Put differently, the table 300 indicates that an object track being lost in the first area 202 of the scene has been resumed in a subset of areas 204, 206, 208 of the scene, the subset comprising at least two areas of the scene among the plurality of areas of the scene, wherein the map further indicates for each area 204, 206, 208 in the subset, the probability 306 that an object track being lost in the first area 202 of the scene is resumed in that area in the subset.

Figures 1-3 shows embodiments where the areas of the scene that are used to identify occluded areas are predetermined. In other embodiments, the scene iteratively is divided into the plurality of areas of the scene. This embodiment is shown in figure 4. In figure 4, the objects that forms the occluded areas are also shown for ease of explanation. In these embodiments, the scene iteratively is divided into the plurality of areas of the scene 401-411, based on positions 412, 414 in the scene where an object track among the plurality of object tracks is lost and resumed. This may be achieved by a clustering algorithm applied to each position 412 indicating a position in the scene where an object track among the plurality of object tracks is lost. In figure 4, these positions are represented by filled circles. These positions 412 have been clustered into 5 clusters, which each is used to determine an area 401, 402, 403, 404, 405 of the scene. Similarly, a clustering algorithm is applied to each position 414 indicating a position in the scene where an object track among the plurality of object tracks is resumed. In figure 4, these positions are represented by unfilled circles. These positions 414 have been clustered into 6 clusters, which each is used to determine an area 406, 407, 408, 409, 410, 411 of the scene. Consequently, the map of occluded area comprises connection (not shown in figure 4) between area according to the below table.

**Table 1**

| Start | End | Probability |
|-------|-----|-------------|
| 401 | 406 | 22% |
| 401 | 407 | 45% |
| 401 | 408 | 33% |
| 403 | 414 | 100% |
| 402 | 411 | 100% |
| 405 | 409 | 100% |
| 404 | 409 | 100% |

The probabilities in table 1 assumes that all object tracks being lost in a start area 401-405 are indeed determined to be resumed in any of the end areas 406-411. However, it should be noted that object tracks being lost sometimes are not resumed, due to that the re-identification algorithm did not succeed to find any object that match the object of the lost object track. The re-identification algorithm may for example fail due to it not being trained/configured for all edge cases. In other examples, the reason may be that a tracked object stayed in the occluded area, e.g. went in to the house. In these cases, the probability may be lower than 100% for a certain start area of the scene.

The positions 412 and the positions 414 may be clustered each time a new track is lost and/or resumed, resulting in that the areas 401-411 may change size and location, or that new areas are added, or two areas are combined into one area. If such change to the areas is made, the corresponding connections (and optionally the probabilities) will change accordingly. For example, if an object track is lost between areas 405 and 404 in figure 4, these areas may in some cases be merged into one area. In another example, if an object track is resumed close to area 409 in figure 4, the area 409 may be divided into two separate areas.

Figure 1-4 shows embodiments of how the map of occluded areas may be built. The map of occluded areas may be built offline, in a configuration phase, using one or more video sequences capturing the scene. The map of occluded areas may also be built and adjusted in real time while the tracker system tracks objects in the scene, for example when available computational resources exist for the tracking system to use.

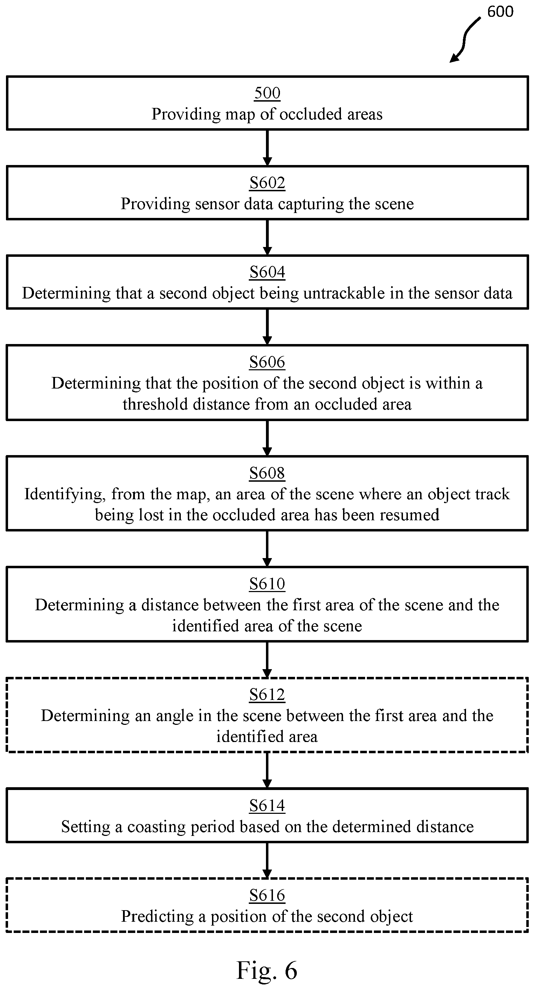

In some embodiments, the map of occluded areas is not considered built until a threshold number of object tracks have been lost and resumed using the techniques described herein. In these embodiments, the map of occluded areas may not be used to improve object tracking (as will be described below in conjunction with figures 6-7) until the threshold number of objects have been lost and resumed.

In some embodiments, a connection between a first area and a second area of the scene, such that the map identifies as an object track being lost in the first area of the scene has been resumed in the second area of the scene, may not be considered as verified until a threshold number of object tracks that were lost in the first area of the scene were indeed resumed in that second area of the scene. In these embodiments, the connection between the first and second area may not be used to improve object tracking (as will be described below in conjunction with figure 6-7) until the connection has been verified.

As described above, the map of occluded areas may be used to improve object tracking. Examples of how to accomplish this will now be described in conjunction with figures 6-7.

Figure 6 shows by way of example a method 600 for improving coasting using the map of occluded areas. A map of occluded areas is provided as described above, for example as shown in method 500 of figure 5, and as exemplified in figure 1-4.

The method 600 comprises the step of providing S602 sensor data capturing the scene. The sensor data may be video data, radar data or lidar data.

The sensor data is used to track objects, to determine object tracks. For example, a second object may be tracked in the sensor data to determine a second object track. If the second object becomes occluded by another object, moves out of the field of view, or the system fails to detect the object due to changes in lighting conditions, noise, or other factors, the second object is thus determined S604 to be untrackable since the tracking system is losing track of the second object. Coasting may thus be needed as discussed above.

Coasting be improved using the map of occluded areas. More specifically, a position in the scene of a latest observation of the second object in the second object track is determined S606. The position is compared to the positions of the occluded areas as specified in the map of occluded areas. In case the position is inside or close to (within a threshold distance) one of the start areas (referred to here as the first area) of an occluded area, the connection(s) between the start area and other areas in the scene may be used to improve coasting. For example, using the map of occluded areas, an area of the scene where an object track being lost in the first area of the scene has been resumed can be identified S608. The identified S608 area is thus the end area for the relevant occluded area (which occludes the second object). Using the example of figure 2, in case a latest observation of the tracked object is within or near area 214 of figure 2, the identified area equals area 216. When an area is identified S608, a distance between the first area of the scene and the identified area of the scene may be determined S610. The distance may be determined using for example the coordinate system of the sensor data, or by counting the pixels between the areas in a representation of the scene. In other embodiments, the map of occluded areas comprises a distance for each connection in the map. Such distance may have been determined during the configuration phase, for example using the field of view of the video camera capturing the one or more video sequences to determine how far one area of the scene is from another area of the scene.

Using the determined S610 distance, the tracking system may estimate a size of the occluded area which is currently hiding the second object. Consequently, the tracking system may set S614 a coasting period based on the estimated size, such that a larger distance results in a comparably longer coasting period. Advantageously, the coasting period may be prolonged or shortened (compared to a predefined global coasting period), based on the assessment, such that it is targeted to the size of the relevant occluded area in the scene increase the possibility that the coasting process is successful. The coasting period may be set based on a predetermined mapping function between a determined distance and coasting period.

In some embodiments, the coasting period is further defined by determining a speed of the second object; and setting the costing period for the second track further based in the speed of the second object, wherein a higher speed results in a comparably shorter coasting period. The coasting period may thus be determined by dividing the determined distance with the speed (possibly adding a margin as well), to estimate the time period during which the second object will be occluded. Moreover, in some embodiments, a position of the second object may be predicted S616 based on the determined speed. For example, if the track has a position x0, y0 at time t, and moves with velocity v (v_x, v_y), the position (x1, y1) of the object at time t+dt can be predicted to be:

$$x1 = x0 + v\_x * dt \qquad \text{Equation 1.}$$

$$y1 = y0 + v\_y * dt \qquad \text{Equation 2.}$$

In some embodiments, the map indicates that an object track being lost in the first area of the scene has been resumed in a subset of areas of the scene, the subset comprising at least two areas of the scene among the plurality of areas of the scene. This example is shown in figure 2-4 and table 1, for area 202 and 401, respectively. In these cases, according to some embodiments, the area of the scene from the subset having the largest probability as indicated by the map may be selected.

In some embodiments, unless the probability of the identified area (i.e., the end area for the relevant occluded area) is meeting a threshold probability, the method 600 is aborted without setting 614 a coasting period, etc.

In some embodiments, an estimated trajectory of the second object while being occluded is also determined based on the map of occluded areas. In these embodiments, an angle in the scene between the first area and the identified area may be determined S612. The position of the second object during the coasting may then be predicted S616 further based on the angle.

Advantageously, the historical data used to configure the map of occluded areas may indicate that an object occluded at a certain area of the scene typically take a certain trajectory when being occluded which may differ from direction at which the object entered the occluded area. Using the techniques described herein, such behaviours may be considered when estimating/predicting the position of the second object during the coasting. In this embodiment, the velocity of the second object before being occluded may need to be mapped to the estimated trajectory.

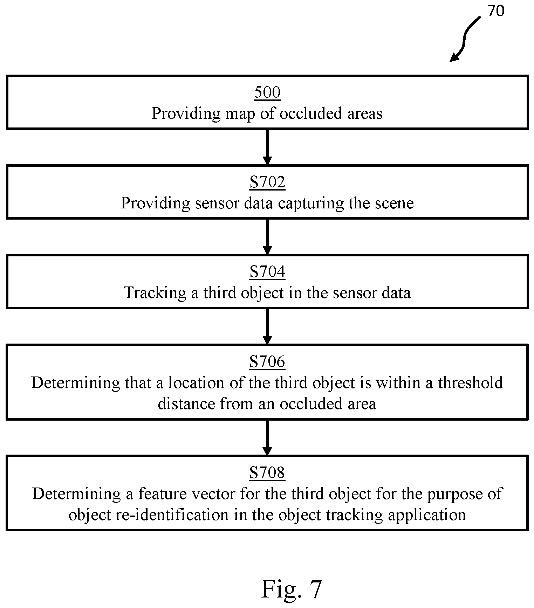

The map of occluded areas may be used for other purposes than improving coasting. For example, as shown in figure 7, the map of occluded areas may be used to improve the chances of a successful and efficient re-identification process. Figure 7 shows by way of example a method 700 for improving re-identification using the map of occluded areas. A map of occluded areas is provided as described above, for example as shown in method 500 of figure 5, and as exemplified in figure 1-4. The method 700 further comprises providing S702 sensor data capturing the scene. The sensor data may comprise video data. Objects may be tracked in the sensor data. For example, a third object may be tracked S704 in the sensor data to determine a third object track. When the third object is getting closer to a start area of an occluded area in the scene, i.e., when it is determined S706 that a location of the third object is within a threshold distance from the first area of the scene, the tracking system may prepare for the possibility that the third object will be occluded. The preparation may include determining S708 a feature vector for the third object for the purpose of object re-identification in the object tracking application. Real-time processing demands and the use of computationally intensive deep learning models for feature extraction from objects may lead to situations where the available computational resources are insufficient to keep a database of feature vectors for all tracked objects in a scene, to prepare for re-identification, especially when a large number of objects are detected in the scene. By prioritizing areas in the scene where object tracks previously have been lost, computational resources may be saved. In other embodiments, the map of occluded objects may be used to determine which areas to not prioritize for re-identification. Since coasting may be improved for the occluded areas of the map as described above, re-identification can be prioritized in other areas of the scene, for example areas that may be temporarily occluded by moving objects.

The above embodiments are to be understood as illustrative examples of the invention. Further embodiments of the invention are envisaged. For example, the map of occluded areas may further be used to set up fixed privacy masks on areas where objects typically get visible again after being occluded. In another example, the map of occluded areas may be used to guide the compression algorithm, for example to compress occluded areas less or more (depending on requirements). Other exemplary use of the map of occluded areas include changing noise filtering, increase gain parameters, adjust local tone mapping, etc., in the sensor data corresponding to an area of the scene where an occluded objects is estimated to appear again, at the time the object is estimated to appear again. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer-implemented method (500) for detecting one or more occluded areas in one or more video sequences analysed by an object tracking system, the method comprising:

   providing (S502) one or more video sequences, wherein the one or more video sequences are depicting a same scene (100), the one or more video sequences comprising a plurality of objects (110, 112, 114, 116);
   determining (S504) a plurality of object tracks in the one or more video sequences,
   building (S506) a map (200, 300) of one or more occluded areas in the one or more video sequences, wherein building the map comprises:

      a) upon determining (S508) that a first object track among the plurality of object tracks is lost, the first object track corresponding to a first object among the plurality of objects, running (S510) a re-identification algorithm on at least one video sequence of the one or more video sequences to try to resume the first object track; **characterized in that** the method further comprises:
      b) upon successfully resuming the first object track:

         determining (S512) a first area (202, 210, 214, 218, 302) where the first object track is lost, wherein the first area is determined in the one or more video sequences among a plurality of areas (102a-n, 202-222, 401-411) in the one or more video sequences, and a second area (304, 204, 206, 208, 212, 216, 220, 222) where the first object track is resumed, wherein the second area is determined in the one or more video sequences among the plurality of areas in the one or more video sequences, wherein each area of the plurality of areas in the one or more video sequences refers to an area in a 2D representation of a 3D area of the scene as captured by the one or more video sequences, wherein the one or more video sequences are associated with a base coordinate system to which objects and areas depicted in image frames of the each video sequence are transformed; and

adding (S514) a connection between the first and the second area to the map of one or more occluded areas, such that the map identifies that an object track being lost in the first area has been resumed in the second area.

2. The method of claim 1, wherein building the map comprises performing step a) and b) on a plurality of lost object tracks among the plurality of object tracks.

3. The method of claim 2, wherein the map of one or more occluded areas further indicates a probability (306) that an object track being lost in the first area is resumed in the second area.

4. The method of claim 3, wherein the map indicates that an object track being lost in the first area has been resumed in a subset of areas in the one or more video sequences, the subset comprising at least two areas in the one or more video sequences among the plurality of areas in the one or more video sequences, wherein the map further indicates for each area in the subset, the probability (306) that an object track being lost in the first area is resumed in that area in the subset.

5. The method of any one of claims 1-4, further comprising the steps of:

providing (S602) sensor data capturing the scene;

tracking a second object in the sensor data to determine a second object track; and

upon determining (S604) that the second object being untrackable in the sensor data, determining (S606) a position in the sensor data of a latest observation of the second object in the second object track, and upon determining that the position of the latest observation of the second object in the second object track is within a threshold distance from the first area:

identifying (S608), from the map, an area in the one or more video sequences where an object track being lost in the first area has been resumed, and determining (S610) a distance between the first area and the identified area, and

setting (S614) a coasting period for the second object track based on the determined distance, wherein a larger distance results in a comparably longer coasting period.

6. The method of claim 5 when being dependent on claim 4, wherein the step of identifying from the map, an area in the one or more video sequences where an object track being lost in the first area has been resumed comprises:

selecting the area in the one or more video sequences from the subset having the largest probability as indicated by the map.

7. The method of any one of claims 5-6, wherein setting the coasting period comprises:

determining a speed of the second object at the latest observation of the second object in the second object track; and

setting the costing period for the second track further based on the speed of the second object, wherein a higher speed results in a comparably shorter coasting period.

8. The method of claim 7, wherein

upon determining that the second object being untrackable in the sensor data:

predicting (S616) a position of the second object while being untrackable in the sensor data based on the determined speed.

9. The method of claim 8, further comprises,

upon determining that the second object being untrackable in the sensor data:

determining (S612) an angle between the first area and the identified area in the one or more video sequences;

predicting (S616) the position of the second object while being untrackable in the sensor data further based on the angle.

10. The method of any one of claims 4-8, wherein the sensor data is one of: radar data, lidar data, or video data.

11. The method of any one of claims 1-10, wherein the plurality of areas in the one or more video sequences comprises a plurality of predetermined areas in the one or more video sequences (102a-n, 202-222).

12. The method of any one of claims 1-11, wherein the one or more video sequences is iteratively divided into the plurality of areas in the one or more video sequences (401-411), based on positions (412, 414) in the one or more video sequences where an object track among the plurality of object tracks is lost and resumed.

13. The method of claim 12, wherein the step of iteratively dividing the one or more video sequences into the plurality of areas in the one or more video sequences comprises:

determining a first plurality of positions (412), each position indicating a position in the one or more video sequences where an object track among the plurality of object tracks is lost, clustering the first plurality of positions into a first plurality of clusters, and for each cluster of the first plurality of clusters, determine an area (401-405) in the one or more video sequences based on the positions in the cluster; and determining a second plurality of positions (414), each position indicating a position in the one or more video sequences where an object track among the plurality of object tracks is resumed, clustering the second plurality of positions into a second plurality of clusters, and for each cluster of the second plurality of clusters, determine an area (406-411) in the one or more video sequences based on the positions in the cluster.

14. The method of any one of claims 1-13, further comprising the steps of:

providing (S702) sensor data capturing the scene; tracking (S704) a third object in the sensor data to determine a third object track; determining (S706) that a location of the third object in the sensor data is within a threshold distance from the first area in the one or more video sequences; and determining (S708) a feature vector for the third object for the purpose of object re-identification in the object tracking application.

15. A non-transitory computer-readable storage medium having stored thereon instructions for implementing the method according to any one of claims 1-14 when executed on a device having processing capabilities

**Patentansprüche**

1. Computerimplementiertes Verfahren (500) zum Erkennen eines oder mehrerer verdeckter Bereiche in einer oder mehreren Videosequenzen, die durch ein Objektverfolgungssystem analysiert werden, wobei das Verfahren Folgendes umfasst:

Bereitstellen (S502) einer oder mehrerer Videosequenzen, wobei die eine oder die mehreren Videosequenzen ein und dieselbe Szene (100) abbilden und die eine oder die mehreren Videosequenzen mehrere Objekte (110, 112, 114, 116) umfassen;
Bestimmen (S504) mehrerer Objektspuren in der einen oder den mehreren Videosequenzen, Erstellen (S506) einer Karte (200, 300) eines oder mehrerer verdeckter Bereiche in der einen oder den mehreren Videosequenzen, wobei das Erstellen der Karte Folgendes umfasst:

a) bei Bestimmen (S508), dass eine erste Objektspur unter den mehreren Objektspuren verloren wird, wobei die erste Objektspur einem ersten Objekt unter den mehreren Objekten entspricht: Ausführen (S510) eines Wiedererkennungsalgorithmus an mindestens einer Videosequenz der einen oder der mehreren Videosequenzen, um zu versuchen, die erste Objektspur wiederaufzunehmen; **dadurch gekennzeichnet, dass** das Verfahren ferner umfasst:
b) bei erfolgreichem Wiederaufnehmen der ersten Objektspur:

Bestimmen (S512) eines ersten Bereichs (202, 210, 214, 218, 302), in dem die erste Objektspur verloren wird, wobei der erste Bereich in der einen oder den mehreren Videosequenzen unter mehreren Bereichen (102a-n, 202-222, 401-411) in der einen oder den mehreren Videosequenzen bestimmt wird, und eines zweiten Bereichs (304, 204, 206, 208, 212, 216, 220, 222), in dem die erste Objektspur wiederaufgenommen wird, wobei der zweite Bereich in der einen oder den mehreren Videosequenzen unter den mehreren Bereichen in der einen oder den mehreren Videosequenzen bestimmt wird, wobei jeder Bereich der mehreren Bereiche in der einen oder den mehreren Videosequenzen auf einen Bereich in einer 2D-Darstellung eines 3D-Bereichs der Szene, wie durch die eine oder die mehreren Videosequenzen aufgenommen, verweist, wobei die eine oder die mehreren Videosequenzen einem Basis-Koordinatensystem zugeordnet sind, in das Objekte und Bereiche, die in Einzelbildern dieser jeden Videosequenz abgebildet sind, umgewandelt werden; und

Hinzufügen (S514) einer Verbindung zwischen dem ersten und dem zweiten Bereich zu der Karte eines oder mehrerer verdeckter Bereiche, so dass die Karte identifiziert, dass eine Objektspur, die in dem ersten Bereich verloren wurde, in dem zweiten Bereich wiederaufgenommen worden ist.

2. Verfahren nach Anspruch 1, wobei das Erstellen der Karte das Durchführen von Schritt a) und b) an mehreren verlorenen Objektspuren unter den mehreren Objektspuren umfasst.

3. Verfahren nach Anspruch 2, wobei die Karte eines oder mehrerer verdeckter Bereiche ferner eine Wahrscheinlichkeit (306) angibt, dass eine Objektspur, die in dem ersten Bereich verloren wird, in dem zweiten Bereich wiederaufgenommen wird.

4. Verfahren nach Anspruch 3, wobei die Karte angibt, dass eine Objektspur, die in dem ersten Bereich verloren wird, in einer Teilmenge von Bereichen in der einen oder den mehreren Videosequenzen wiederaufgenommen wurde, wobei die Teilmenge mindestens zwei Bereiche in der einen oder den mehreren Videosequenzen unter den mehreren Bereichen in der einen oder den mehreren Videosequenzen umfasst, wobei die Karte ferner für jeden Bereich in der Teilmenge die Wahrscheinlichkeit (306) angibt, dass eine Objektspur, die in dem ersten Bereich verloren wird, in diesem Bereich in der Teilmenge wiederaufgenommen wird.

5. Verfahren nach einem der Ansprüche 1-4, ferner umfassend die folgenden Schritte:

Bereitstellen (S602) von Sensordaten, welche die Szene aufnehmen;
Verfolgen eines zweiten Objekts in den Sensordaten, um eine zweite Objektspur zu bestimmen;
und
bei Bestimmen (S604), dass das zweite Objekt in den Sensordaten unverfolgbar ist, Bestimmen (S606) einer Position in den Sensordaten einer letzten Beobachtung des zweiten Objekts in der zweiten Objektspur, und bei Bestimmen, dass sich die Position der letzten Beobachtung des zweiten Objekts in der zweiten Objektspur innerhalb eines Mindestabstands von dem ersten Bereich befindet:

Identifizieren (S608), aus der Karte, eines Bereichs in der einen oder den mehreren Videosequenzen, in dem eine Objektspur, die in dem ersten Bereich verloren wird, wiederaufgenommen wurde, und Bestimmen (S610) eines Abstands zwischen dem ersten Bereich und dem identifizierten Bereich,
und
Festlegen (S614) eines Weiterverfolgungszeitraums für die zweite Objektspur basierend auf dem bestimmten Abstand, wobei ein größerer Abstand zu einem vergleichsweise längeren Weiterverfolgungszeitraum führt.

6. Verfahren nach Anspruch 5, wenn er von Anspruch 4 abhängt, wobei der Schritt des Identifizierens, aus der Karte, eines Bereichs in der einen oder den mehreren Videosequenzen, in dem eine Objektspur, die in dem ersten Bereich verloren wird, wiederaufgenommen wurde, umfasst:
Auswählen des Bereichs in der einen oder den mehreren Videosequenzen aus der Teilmenge, welche die größte Wahrscheinlichkeit aufweist, wie durch die Karte angegeben.

7. Verfahren nach einem der Ansprüche 5-6, wobei das Festlegen des Weiterverfolgungszeitraums Folgendes umfasst:

Bestimmen einer Geschwindigkeit des zweiten Objekts bei der letzten Beobachtung des zweiten Objekts in der zweiten Objektspur; und
Festlegen des Weiterverfolgungszeitraums für die zweite Spur, ferner basierend auf der Geschwindigkeit des zweiten Objekts, wobei eine höhere Geschwindigkeit zu einem vergleichsweise kürzeren Weiterverfolgungszeitraum führt.

8. Verfahren nach Anspruch 7, wobei

bei Bestimmen, dass das zweite Objekt in den Sensordaten unverfolgbar ist,
Vorhersagen (S616) einer Position des zweiten Objekts, während es in den Sensordaten unverfolgbar ist, basierend auf der bestimmten Geschwindigkeit.

9. Verfahren nach Anspruch 8, ferner umfassend bei Bestimmen, dass das zweite Objekt in den Sensordaten unverfolgbar ist:

Bestimmen (S612) eines Winkels zwischen dem ersten Bereich und dem identifizierten Bereich in der einen oder den mehreren Videosequenzen;
Vorhersagen (S616) der Position des zweiten Objekts, während es in den Sensordaten unverfolgbar ist, ferner basierend auf dem Winkel.

10. Verfahren nach einem der Ansprüche 4-8, wobei es sich bei den Sensordaten um eines von Folgenden handelt: Radardaten, Lidardaten oder Videodaten.

11. Verfahren nach einem der Ansprüche 1-10, wobei die mehreren Bereiche in der einen oder den mehreren Videosequenzen mehrere vorgegebene Bereiche in der einen oder den mehreren Videosequenzen (102a-n, 202-222) umfassen.

12. Verfahren nach einem der Ansprüche 1-11, wobei die eine oder die mehreren Videosequenzen basierend auf Positionen (412, 414) in der einen oder den mehreren Videosequenzen, an denen eine Objektspur unter den mehreren Objektspuren verloren und wiederaufgenommen wird, iterativ in die mehreren Bereiche in der einen oder den mehreren Videosequenzen (401-411) unterteilt werden.

13. Verfahren nach Anspruch 12, wobei der Schritt des iterativen Unterteilens der einen oder der mehreren Videosequenzen in die mehreren Bereiche in der einen oder den mehreren Videosequenzen Folgendes umfasst:

Bestimmen mehrerer erster Positionen (412), wobei jede Position eine Position in der einen oder den mehreren Videosequenzen angibt, bei der eine Objektspur unter den mehreren Objektspuren verloren wird, Clusteranalyse der mehreren ersten Positionen in mehreren ersten Clustern, und für jeden Cluster der mehreren ersten Cluster, Bestimmen eines Bereichs (401-405) in der einen oder den mehreren Videosequenzen basierend auf den Positionen in dem Cluster; und
Bestimmen mehrerer zweiter Positionen (414), wobei jede Position eine Position in der einen oder den mehreren Videosequenzen, an der eine Objektspur unter den mehreren Objektspuren wiederaufgenommen wird, angibt, Clusteranalyse der mehreren zweiten Positionen in mehreren zweiten Clustern, und für jeden Cluster der mehreren zweiten Cluster, Bestimmen eines Bereichs (406-411) in der einen oder den mehreren Videosequenzen basierend auf den Positionen in dem Cluster.

14. Verfahren nach einem der Ansprüche 1-13, ferner umfassend die folgenden Schritte:

Bereitstellen (S702) von Sensordaten, welche die Szene aufnehmen;
Verfolgen (S704) eines dritten Objekts in den Sensordaten, um eine dritte Objektspur zu bestimmen;

Bestimmen (S706), dass sich eine Position des dritten Objekts in den Sensordaten innerhalb eines Mindestabstands von dem ersten Bereich in der einen oder den mehreren Videosequenzen befindet; und
Bestimmen (S708) eines Merkmalsvektors für das dritte Objekt zum Zweck einer Wiedererkennung von Objekten bei der Objektverfolgungsanwendung.

15. Nicht-transitorisches computerlesbares Speichermedium, auf dem Anweisungen zum Implementieren des Verfahrens nach einem der Ansprüche 1-14, wenn sie auf einer Vorrichtung mit Verarbeitungsfähigkeiten ausgeführt werden, gespeichert sind.

**Revendications**

1. Procédé mis en œuvre par ordinateur (500) pour détecter une ou plusieurs zones d'occlusion dans une ou plusieurs séquences vidéo analysées par un système de suivi d'objets, le procédé comprenant les étapes suivantes :

fournir (S502) une ou plusieurs séquences vidéo, les une ou plusieurs séquences vidéo représentant une même scène (100), les une ou plusieurs séquences vidéo comprenant une pluralité d'objets (110, 112, 114, 116) ;
déterminer (S504) une pluralité de pistes d'objet dans les une ou plusieurs séquences vidéo, construire (S506) une carte (200, 300) d'une ou plusieurs zones d'occlusion dans les une ou plusieurs séquences vidéo, où la construction de la carte comprend les étapes suivantes :

a) lorsqu'il est déterminé (S508) qu'une première piste d'objet parmi la pluralité de pistes d'objet est perdue, la première piste d'objet correspondant à un premier objet parmi la pluralité d'objets, exécuter (S510) un algorithme de réidentification sur au moins une séquence vidéo des une ou plusieurs séquences vidéo pour tenter de reprendre la première piste d'objet ; **caractérisé en ce que** le procédé comprend en outre les étapes suivantes :
b) lorsque la première piste d'objet est reprise avec succès :

déterminer (S512) une première zone (202, 210, 214, 218, 302) où la première piste d'objet est perdue, la première zone étant déterminée dans les une ou plusieurs séquences vidéo parmi une pluralité de zones (102a-n, 202-222, 401-411) dans les une ou plusieurs séquences vidéo, et une deuxième zone (304, 204, 206, 208, 212, 216, 220, 222) où la première piste d'objet est reprise, où la deuxième zone est déterminée dans les une ou plusieurs séquences vidéo parmi la pluralité de zones dans les une ou plusieurs séquences vidéo, où chaque zone de la pluralité de zones dans les une ou plusieurs séquences vidéo se réfère à une zone dans une représentation 2D d'une zone 3D de la scène telle que capturée par les une ou plusieurs séquences vidéo, où les une ou plusieurs séquences vidéo sont associées à un système de coordonnées de base dans lequel les objets et les zones représentés dans les trames d'image de chaque séquence vidéo sont transformés ; et

ajouter (S514) une connexion entre la première zone et la deuxième zone à la carte des une ou plusieurs zones occluses, de sorte que la carte identifie qu'une piste d'objet perdue dans la première zone a été reprise dans la deuxième zone.

**2.** Procédé selon la revendication 1, dans lequel la construction de la carte comprend l'exécution des étapes a) et b) sur une pluralité de pistes d'objet perdues parmi la pluralité de pistes d'objet.

**3.** Procédé selon la revendication 2, dans lequel la carte d'une ou plusieurs zones occluses indique en outre une probabilité (306) qu'une piste d'objet perdue dans la première zone soit reprise dans la deuxième zone.

**4.** Procédé selon la revendication 3, dans lequel la carte indique qu'une piste d'objet perdue dans la première zone a été reprise dans un sous-ensemble de zones dans les une ou plusieurs séquences vidéo, le sous-ensemble comprenant au moins deux zones dans les une ou plusieurs séquences vidéo parmi la pluralité de zones dans les une ou plusieurs séquences vidéo, où la carte indique en outre, pour chaque zone du sous-ensemble, la probabilité (306) qu'une piste d'objet perdue dans la première zone soit reprise dans cette zone du sous-ensemble.

**5.** Procédé selon l'une quelconque des revendications 1 à 4, comprenant en outre les étapes suivantes :

fournir (S602) des données de capteur capturant la scène ;
suivre un deuxième objet dans les données de capteur pour déterminer une deuxième piste d'objet ; et
après avoir déterminé (S604) que le deuxième objet n'est pas traçable dans les données de capteur, déterminer (S606) une position dans les données de capteur d'une dernière observation du deuxième objet dans la deuxième piste d'objet et, après avoir déterminé que la position de la dernière observation du deuxième objet dans la deuxième piste d'objet se trouve dans les limites d'une distance seuil de la première zone :

identifier (S608), à partir de la carte, une zone dans les une ou plusieurs séquences vidéo où une piste d'objet perdue dans la première zone a été reprise, et déterminer (S610) une distance entre la première zone et la zone identifiée, et
définir (S614) une période de dérive pour la deuxième piste d'objet sur la base de la distance déterminée, une distance plus grande conduisant à une période de dérive comparativement plus longue.

**6.** Procédé selon la revendication 5, lorsqu'elle dépend de la revendication 4, dans lequel l'étape d'identification, à partir de la carte, d'une zone dans les une ou plusieurs séquences vidéo où une piste d'objet perdue dans la première zone a été reprise comprend :
la sélection de la zone dans les une ou plusieurs séquences vidéo à partir du sous-ensemble ayant la plus grande probabilité telle qu'indiquée par la carte.

**7.** Procédé selon l'une quelconque des revendications 5 et 6, dans lequel la définition de la période de dérive comprend les étapes suivantes :

déterminer une vitesse du deuxième objet lors de la dernière observation du deuxième objet dans la piste du deuxième objet ; et
définir la période de dérive pour la deuxième piste en se basant en outre sur la vitesse du deuxième objet, une vitesse plus élevée conduisant à une période de dérive comparativement plus courte.

**8.** Procédé selon la revendication 7, dans lequel lorsqu'il est déterminé que le deuxième objet n'est pas traçable dans les données de capteur :
prédire (S616) une position du deuxième objet alors qu'il est introuvable dans les données de capteur sur la base de la vitesse déterminée.

**9.** Procédé selon la revendication 8, comprenant en outre les étapes suivantes,
lorsqu'il est déterminé que le deuxième objet n'est pas traçable dans les données de capteur :

déterminer (S612) un angle entre la première zone et la zone identifiée dans les une ou plusieurs séquences vidéo ;

prédire (S616) la position du deuxième objet alors qu'il est introuvable dans les données de capteur en se basant en outre sur l'angle.

10. Procédé selon l'une quelconque des revendications 4 à 8, dans lequel les données de capteur sont l'une des données suivantes : des données radar, des données lidar ou des données vidéo.

11. Procédé selon l'une quelconque des revendications 1 à 10, dans lequel la pluralité de zones dans les une ou plusieurs séquences vidéo comprend une pluralité de zones prédéterminées dans les une ou plusieurs séquences vidéo (102a-n, 202-222).

12. Procédé selon l'une quelconque des revendications 1 à 11, dans lequel les une ou plusieurs séquences vidéo sont divisées de manière itérative en la pluralité de zones dans les une ou plusieurs séquences vidéo (401-411), sur la base des positions (412, 414) dans les une ou plusieurs séquences vidéo où une piste d'objet parmi la pluralité de pistes d'objet est perdue et reprise.

13. Procédé selon la revendication 12, dans lequel l'étape de division itérative des une ou plusieurs séquences vidéo en la pluralité de zones dans les une ou plusieurs séquences vidéo comprend les étapes suivantes :

déterminer une première pluralité de positions (412), chaque position indiquant une position dans les une ou plusieurs séquences vidéo où une piste d'objet parmi la pluralité de pistes d'objet est perdue, regrouper la première pluralité de positions en une première pluralité de groupes et, pour chaque groupe de la première pluralité de groupes, déterminer une zone (401-405) dans les une ou plusieurs séquences vidéo sur la base des positions dans le groupe ; et

déterminer une deuxième pluralité de positions (414), chaque position indiquant une position dans les une ou plusieurs séquences vidéo où une piste d'objet parmi la pluralité de pistes d'objet est reprise, regrouper la deuxième pluralité de positions en une deuxième pluralité de groupes et, pour chaque groupe de la deuxième pluralité de groupes, déterminer une zone (406-411) dans les une ou plusieurs séquences vidéo sur la base des positions dans le groupe.

14. Procédé selon l'une quelconque des revendications 1 à 13, comprenant en outre les étapes suivantes :

fournir (S702) des données de capteur capturant la scène ;

suivre (S704) un troisième objet dans les données de capteur pour déterminer une troisième piste d'objet ;

déterminer (S706) qu'un emplacement du troisième objet dans les données de capteur se trouve dans les limites d'une distance seuil de la première zone dans les une ou plusieurs séquences vidéo ; et

déterminer (S708) un vecteur caractéristique pour le troisième objet dans le but de réidentifier l'objet dans l'application de suivi d'objet.

15. Support de stockage non transitoire lisible par ordinateur sur lequel sont stockées des instructions permettant, lorsqu'elles s'exécutent sur un dispositif doté de capacités de traitement, la mise en œuvre du procédé selon l'une quelconque des revendications 1 à 14.

Fig. 1

200

Fig. 2

| Start | End | Probability |
|-------|-----|-------------|
| 202 | 204 | 20% |
| 202 | 206 | 60% |
| 202 | 208 | 10% |
| 214 | 216 | 75% |

302    304    306

300

Fig. 3

Fig. 4

500

```
┌──────────────────────────────────────────────────────────┐
│                          S502                              │
│     Providing one or more video sequences depicting the    │
│                          scene                             │
└──────────────────────────────────────────────────────────┘
                            │
                            ▼
┌──────────────────────────────────────────────────────────┐
│                          S504                              │
│            Determining a plurality of object tracks        │
└──────────────────────────────────────────────────────────┘
                            │
                            ▼
┌──────────────────────────────────────────────────────────┐
│                          S506                              │
│     Building a map of one or more occluded areas in the    │
│                          scene                             │
│  ┌────────────────────────────────────────────────────┐   │
│  │                      S508                            │   │
│  │        Determining that a first object track is      │   │
│  │                      lost.                           │   │
│  └────────────────────────────────────────────────────┘   │
│                          │                                 │
│                          ▼                                 │
│  ┌────────────────────────────────────────────────────┐   │
│  │                      S510                            │   │
│  │           Running a re-identification algorithm      │   │
│  └────────────────────────────────────────────────────┘   │
│                          │                                 │
│                          ▼                                 │
│  ┌────────────────────────────────────────────────────┐   │
│  │                      S512                            │   │
│  │  Determining a first area of the scene where the     │   │
│  │  first object track is lost and a second area of     │   │
│  │  the where the first object track is resumed         │   │
│  └────────────────────────────────────────────────────┘   │
│                          │                                 │
│                          ▼                                 │
│  ┌────────────────────────────────────────────────────┐   │
│  │                      S514                            │   │
│  │  Adding a connection between the first and the       │   │
│  │  second area of the scene to the map of occluded     │   │
│  │  areas                                               │   │
│  └────────────────────────────────────────────────────┘   │
└──────────────────────────────────────────────────────────┘
```

Fig. 5

600

```
┌─────────────────────────────────────────────────────────┐
│                          500                            │
│              Providing map of occluded areas            │
└─────────────────────────────────────────────────────────┘
                            │
                            ▼
┌─────────────────────────────────────────────────────────┐
│                         S602                            │
│          Providing sensor data capturing the scene      │
└─────────────────────────────────────────────────────────┘
                            │
                            ▼
┌─────────────────────────────────────────────────────────┐
│                         S604                            │
│  Determining that a second object being untrackable in the sensor data │
└─────────────────────────────────────────────────────────┘
                            │
                            ▼
┌─────────────────────────────────────────────────────────┐
│                         S606                            │
│     Determining that the position of the second object is within a │
│          threshold distance from an occluded area       │
└─────────────────────────────────────────────────────────┘
                            │
                            ▼
┌─────────────────────────────────────────────────────────┐
│                         S608                            │
│  Identifying, from the map, an area of the scene where an object track │
│          being lost in the occluded area has been resumed │
└─────────────────────────────────────────────────────────┘
                            │
                            ▼
┌─────────────────────────────────────────────────────────┐
│                         S610                            │
│  Determining a distance between the first area of the scene and the │
│                 identified area of the scene            │
└─────────────────────────────────────────────────────────┘
                            │
                            ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─┐
│                         S612                            │
│  Determining an angle in the scene between the first area and the │
│                      identified area                    │
└ ─ ─ ─ ─ ─ ─ ─ ─ ─ ─ ─ ─ ─ ─ ─ ─ ─ ─ ─ ─ ─ ─ ─ ─ ─ ─ ─ ─┘
                            │
                            ▼
┌─────────────────────────────────────────────────────────┐
│                         S614                            │
│     Setting a coasting period based on the determined distance │
└─────────────────────────────────────────────────────────┘
                            │
                            ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─┐
│                         S616                            │
│          Predicting a position of the second object     │
└ ─ ─ ─ ─ ─ ─ ─ ─ ─ ─ ─ ─ ─ ─ ─ ─ ─ ─ ─ ─ ─ ─ ─ ─ ─ ─ ─ ─┘
```

Fig. 6

70

500
Providing map of occluded areas

S702
Providing sensor data capturing the scene

S704
Tracking a third object in the sensor data

S706
Determining that a location of the third object is within a threshold distance from an occluded area

S708
Determining a feature vector for the third object for the purpose of object re-identification in the object tracking application

Fig. 7

EP 4 488 939 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAMES BLACK et al.** PATTERN ANALYSIS AND APPLICATIONS. SPRINGER-VERLAG, 01 December 2004, vol. 7

- **FERNANDEZ-SANJURJO MAURO et al.** *TOPICS IN CRYPTOLOGY - CT-RSA 2020*, 22 September 2019